# EUROPEAN PATENT APPLICATION

(11) **EP 4 650 113 A1**
(43) Date of publication of application: **19.11.2025**
(21) Application number: 25172326.8
(22) Date of filing: 24.04.2025
(51) Int. Cl.: B25F 5/00, H01M 10/42, H01M 10/48, H02J 7/00, F16P 7/02, H02P 3/06

(54) **REGENERATIVE BRAKING CURRENT CONTROL IN POWER TOOL**

(30) Priority: 13.05.2024 US 202418661954
(71) Applicant: Black & Decker, Inc., New Britain, CT 06053 (US)
(72) Inventor: LIU, Jun, Suzhou 215101 (CN); LI, RuiCheng, Suzhou 215021 (CN); KUNZ, Eric, Shrewsbury 17361 (US); YAO, HuaMing, Suzhou 215021 (CN); GAO, Lei, Suzhou 215021 (CN)
(74) Representative: SBD IPAdmin

(57) **Abstract**

A power tool is provided including: a tool housing; a motor disposed within the tool housing; a battery receptacle arranged to be coupled to a battery pack having a rated capacity; a power switch circuit disposed between the battery receptacle and the motor; and a controller that controls the power switch circuit to drive the motor. The controller is configured to: determine or receive a pack ID associated with the rated capacity of the battery pack; set a braking profile for electronically braking the motor based on the pack ID; and apply an electronic brake to the motor in accordance with the set braking profile upon detection of an event associated with stoppage of the motor.

## Description

### FIELD

This application relates to regenerative braking current control in a power tool, and particularly to a control scheme for optimizing the regenerative braking current based on a unique identification of a battery pack.

### BACKGROUND

Cordless power tools provide many advantages to traditional corded power tools. In particular, cordless tools provide unmatched convenience and portability. An operator can use a cordless power tool anywhere and anytime, regardless of the availability of a power supply. In addition, cordless power tools provide increased safety and reliability because there is no cumbersome cord to maneuver around while working on the job, and no risk of accidently cutting a cord in a hazardous work area.

Brushless DC (BLDC) motors have been used in recent years in various cordless power tools. BLDC motors offer many size and power output advantages over universal and permanent magnet DC motors. BLDC motors are electronically-controller via a programmable controller, and thus do not suffer from many mechanical failures associated with universal motor. Further, BLDC motors may be braked electronically, by utilizing the inductive current of the motor to bring it to a halt.

An advantage that is sought in cordless power tools is maximizing usage of the power tool for the full discharge cycle of the battery pack. It is highly desirable to utilize the inductive current of the motor during braking to recharge the battery pack (in a process known as regenerative braking) to extend the runtime of the battery pack.

### SUMMARY

According to an embodiment of the invention, a power tool is provided including: a tool housing; a motor disposed within the tool housing; a battery receptacle arranged to be coupled to a battery pack having a rated capacity; a power switch circuit disposed between the battery receptacle and the motor; and a controller that controls the power switch circuit to drive the motor. The controller is configured to: determine or receive a pack ID associated with the rated capacity of the battery pack; set a braking profile for electronically braking the motor based on the pack ID; and apply an electronic brake to the motor in accordance with the set braking profile upon detection of an event associated with stoppage of the motor.

In an embodiment, the battery pack includes one of a first battery pack having a first rated capacity and a second battery pack having a second rated capacity higher than the first rated capacity.

In an embodiment, the controller is configured to set the braking profile such that a regenerative current supplied to the battery pack during the electronic brake is less for the first battery pack than it is for the second battery pack.

In an embodiment, the braking profile includes a soft braking segment including periods of braking during which an inductive current of the motor is generated, each followed by a period of coasting during which a regenerative current associated with the inductive current is supplied to the battery pack.

In an embodiment, the controller is configured to set a duration of the soft braking segment based on the pack ID. In an embodiment, the controller is configured to set the duration of the soft braking segment to be greater the second battery pack that it is for the first battery pack such that a regenerative current supplied to the battery pack during the electronic brake is greater for the second battery pack than it is for the first battery pack.

In an embodiment, the controller is configured to set a maximum range of a duty cycle of the periods of braking within the soft braking segment based on the pack ID. In an embodiment, the controller is configured to set the maximum range of the duty cycle of the periods of braking within the soft braking segment to be greater the second battery pack that it is for the first battery pack such that a regenerative current supplied to the battery pack during the electronic brake is greater for the second battery pack than it is for the first battery pack.

In an embodiment, the controller is configured to set a regenerative current threshold applied to a regenerative current supplied to the battery pack within the soft braking segment based on the pack ID. In an embodiment, the controller is configured to set the regenerative current threshold to be greater the second battery pack that it is for the first battery pack such that the regenerative current supplied to the battery pack during the electronic brake is greater for the second battery pack than it is for the first battery pack.

In an embodiment, the braking profile further comprises a hard braking segment, wherein the controller is configured to set a duration of the hard braking segment based on the pack ID. In an embodiment, a speed drop in the output of the motor during the soft braking segment is greater for the second battery pack than it is for the first battery pack.

In an embodiment, a total amount of regenerative energy provided to the battery pack is greater for the second battery pack than it is for the first battery pack.

According to an embodiment of the invention, a power tool is provided including: a tool housing; a motor disposed within the tool housing; a battery receptacle arranged to be coupled to a battery pack having a rated capacity; a power switch circuit disposed between the battery receptacle and the motor; and a controller that controls the power switch circuit to drive the motor. The controller is configured to: determine or receive a pack ID associated with the rated capacity of the battery pack; set a regenerative current threshold based on the pack ID; apply an electronic brake to the motor upon detection of an event associated with stoppage of the motor; and maintain a regenerative current supplied to the battery pack during the electronic brake at or below the regenerative current threshold.

In an embodiment, the battery pack comprises one of a first battery pack having a first rated capacity and a second battery pack having a second rated capacity higher than the first rated capacity. In an embodiment, the controller is configured to set the regenerative current threshold such that the regenerative current is less for the first battery pack than it is for the second battery pack.

In an embodiment, the electronic brake is applied according to a braking profile comprising a soft braking segment including periods of braking during which an inductive current of the motor is generated, each followed by a period of coasting during which a regenerative current associated with the inductive current is supplied to the battery pack.

In an embodiment, the controller is configured to set a duration of the soft braking segment based on the pack ID.

In an embodiment, the controller is configured to set a maximum range of a duty cycle of the periods of braking within the soft braking segment based on the pack ID.

In an embodiment, the controller is configured to apply the regenerative current threshold during the soft braking segment. In an embodiment, the braking profile further comprises a hard braking segment, and the controller is configured to additionally set a duration of the hard braking segment based on the pack ID.

In an embodiment, the regenerative current threshold is set to 10A if the rated capacity of the battery pack is 3 Ah or less, and to 20A if the rated capacity of the battery pack is 9 Ah or more.

### DRAWINGS

The various advantages of the embodiments will become apparent to one skilled in the art by reading the following specification and appended claims, and by referencing the following drawings, in which:
FIG. 1 depicts an exemplary high-power power tool, in this case a cordless miter saw, according to an embodiment.
FIG. 2 depicts an exemplary perspective view of the miter saw with a side housing removed, according to an embodiment.
FIG. 3 depicts an exemplary partially-exploded view of a motor disposed within the power tool, according to an embodiment.
FIG. 4 depicts an exemplary block circuit diagram of the power tool components, including a motor control and power module, according to an embodiment.
FIG. 5 depicts an exemplary power switch circuit having a three-phase inverter bridge circuit, according to an embodiment.
FIG. 6 depicts an exemplary waveform diagram of a pulse-width modulation (PWM) drive sequence of the three-phase inventor bridge circuit of FIG. 5 within a full 360-degree conduction cycle.
FIG. 7 depicts a view of a set of exemplary power tools receiving different capacity battery packs, according to an embodiment.
FIGs. 8A-8C depict simple circuit diagrams of battery packs, respectively, according to an embodiment.
FIG. 9 is a simplified circuit diagram of a battery pack identification mechanism and the corresponding power tool mechanism for pack ID detection, according to an embodiment.
FIG. 10 is a table depicting different capacitance values for different capacity battery packs, according to an embodiment.
FIG. 11 depicts a circuit diagram of the three-phase inverter bridge circuit, showing the current path generated by the back-EMF of the motor when the three low-side switches are turned on simultaneously, according to an embodiment.
Fig. 12 depicts a waveform diagram of a hard braking scheme, according to an embodiment.
FIG. 13 depicts a waveform diagram for a soft braking scheme, according to an embodiment.
Fig. 14 depicts an exemplary flow diagram of a process for controlling the braking profile based on pack ID utilized by the controller, according to an embodiment.
FIGs. 15A-15D depict speed-time graphs of an exemplary power tool including the braking profiles of the power tool that are set according to the pack ID of battery packs, respectively, according to an embodiment.
FIG. 16 depicts an exemplary flow diagram of a process utilized by the controller to maintain the regenerative current at or below a regenerative current threshold, according to an embodiment.

Corresponding reference numerals indicate corresponding parts throughout the several views of the drawings.

### DESCRIPTION

Example embodiments will now be described more fully with reference to the accompanying drawings.

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

Reference is initially made to US Patent No. 9,406,915, which is incorporated herein by reference in its entirety, for detailed description of a power tool system including high-power (i.e. 60V or above) DC-only or AC/DC power tools having brushless DC (BLDC) motors. Reference is also made to US Patent No. 10,177,691 as an example of a miter saw executing electronic braking to stop the rotation a saw blade after the completion of a cutting operation.

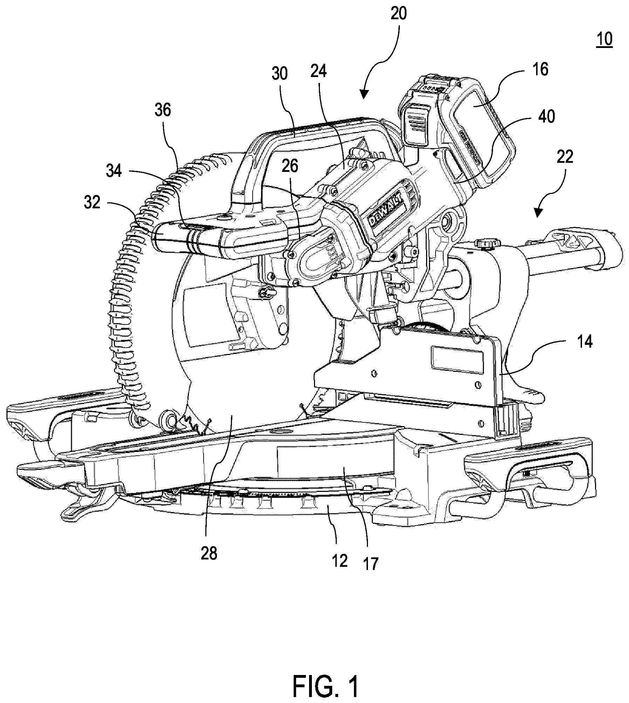

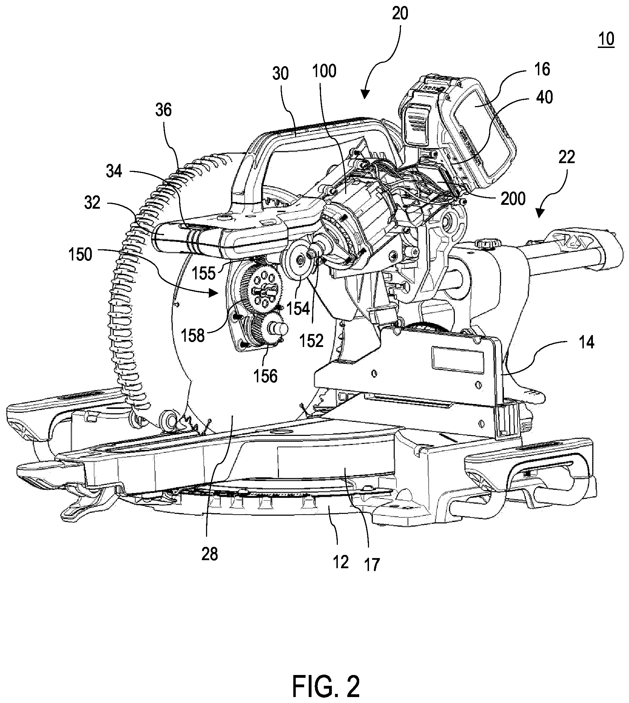

FIG. 1 depicts an exemplary high-power power tool, in this case a cordless miter saw 10, according to an embodiment. FIG. 2 depicts an exemplary perspective view of the miter saw 10 with a side housing removed, according to an embodiment.

In an embodiment, miter saw 10 has a generally circular base 12 with an attached fence 14, which base supports a rotatable table 17 that is rotatably adjustable for setting the miter angle of the work piece placed on the table 17. A saw blade and motor assembly, indicated generally at 20, is operatively connected to the table 17 by a linear guide mechanism, indicated generally at 22. The saw blade and motor assembly 20 includes a motor housing 24 housing an electric motor 100 and a gear housing 26 that houses a gear reduction mechanism 150 rotatably connecting a saw blade 28 to the electric motor 100. A handle 30 is used by an operator to carry the saw 10. An auxiliary handle 32 is provided forward of the handle 30 that enables an operator to move the blade and motor assembly 20 into and out of engagement with a work piece that may be placed on the table 17 adjacent the fence 14. Auxiliary handle 32 support a trigger switch 34. The operator activates the motor by actuating the trigger switch 34. A guard 36 is provided to shield an upper area of the blade 28.

The miter saw as illustrated in FIGs. 1 and 2 is illustrative and the teachings of this disclosure may apply to any miter saw, or any other high-power power tool. For more details about an exemplary miter saw, reference is made to US Patent 8,631,734, which is incorporated herein by reference in its entirety.

In an embodiment, the power tool 10 includes one or more battery receptacles 40 formed at an end of the motor housing 24. Battery receptacles 40 may receive a battery pack 16 such as a 60V max battery pack, a 20/60V max convertible battery pack, or a 20V max battery pack. Battery pack 16 supplies DC electric power to power the motor 100. In an embodiment, a power and control module 200 is disposed along the current path from the battery pack 16 to the motor 100 to regulate the supply of electric power to the motor 100.

In an embodiment, the gear reduction mechanism 150 includes a pinion 152 coupled to the motor 100, a bevel gear 154 driven by the pinion 152, a coupling gear 155 coaxial with the bevel gear 154, a drive gear 156 coaxial with the blade 28, and an intermediary gear 158 disposed between the drive gear 156 and the coupling gear 155. In an embodiment, the gear reduction mechanism 150 provides a gear reduction in the range of approximately 5:1 to 10:1 to reduce the output speed of the motor 100 from the range of approximately 18,000 to 30,000 rpm to a blade speed in the range of approximately 2,500 to 4,000 rpm.

In an embodiment, the power tool 10 is an angle die grinder by way of example, though it should be understood that the principles described herein may be utilized in various other power tools such as a regular angle grinder, a cutout tool, a polisher, a wrench, a drill, an impact driver, a hammer drill, a circular saw, a reciprocating saw, a band saw, a nailer, etc.

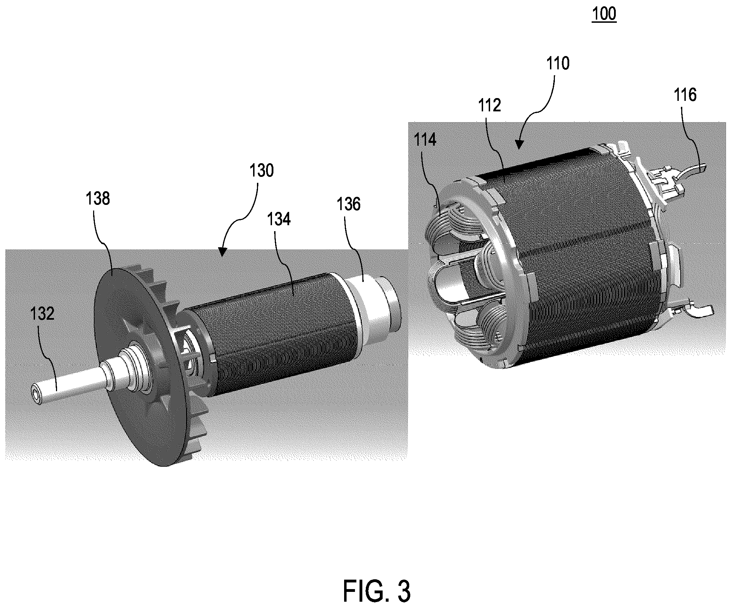

FIG. 3 depicts an exemplary partially-exploded view of the motor 100, according to an embodiment. The motor 100 is described in great detail in US Patent Application Serial No. 10,603,777, contents of which are incorporated herein by reference in entirety. In short, motor 100 includes a stator 110 secured within the motor housing 24 and a rotor 130 rotatably disposed within the stator 110. In an embodiment, stator 110 includes a stator core 112 made of a series of steel laminations secured together and forming a series of inwardly-projecting stator teeth, a series of stator winding 114 wound around the stator teeth in known configurations such as a wye or a delta configuration, a series of terminals 116 that receive electric power from the power and control module 200 via a series of power wires (not shown). In an embodiment, rotor 130 includes a rotor shaft 132, a rotor core 134 that houses a series of permanent magnets (not shown) embedded therein mounted on the shaft 132, one or more bearings 136 that radially support the rotor shaft relative to the stator 110, and a fan 138 provided to cool the stator windings 114.

In an embodiment, the motor 100 is sized and configured to provide a maximum power output of at least approximately 1800 watts, preferably at least approximately 2000 watts, even more preferably at least approximately 2200 watts. As discussed below, this power level is needed to bring the blade 28 to its desired rotational speed in a relatively short amount of time (e.g., between approximately 0.8 to 1.8 seconds, preferably approximately 1.3 seconds). In an embodiment, to accomplish this power level, the motor 100 is provided with a stator diameter of approximately 50 mm to 70 mm, preferably approximately 55 mm to 65 mm; a stator length of approximately 30 mm to 60 mm, preferably approximately 40 mm to 50 mm; and a total motor weight of approximately 600 grams to 1.1 kg, preferably approximately 750 grams to 950 grams.

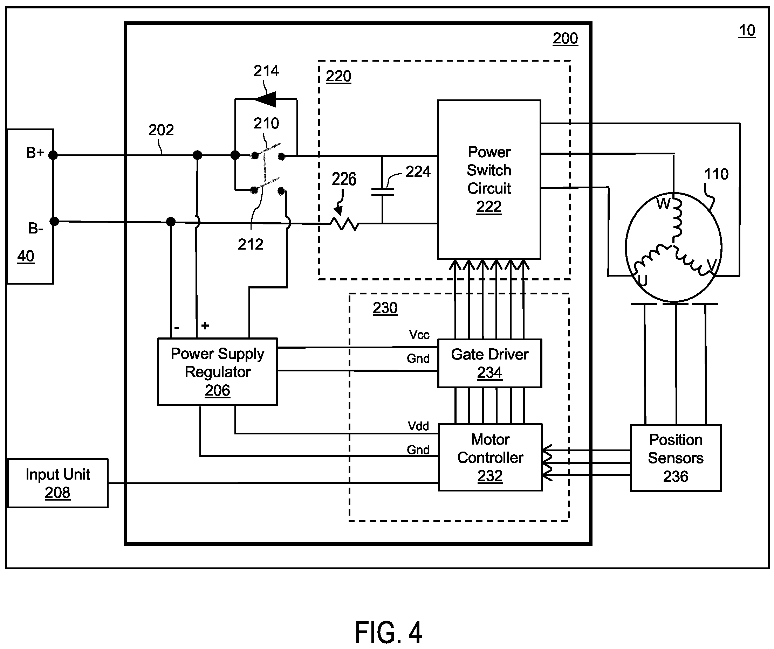

FIG. 4 depicts an exemplary block circuit diagram of the power tool 10 components, including the motor control and power module 200 disposed between battery receptacle 40 and motor 100, according to an embodiment.

In an embodiment, motor control and power module 200 includes a power unit 220 and a control unit 230.

In an embodiment, power unit 220 may include a power switch circuit 222 that receives electric power on a DC bus line 202 from the B+/B- terminals of the battery receptacle 40 and supplies power to the motor windings to drive the motor 100. In an embodiment, power switch circuit 222 may be a three-phase bridge driver circuit including six controllable semiconductor power switches, e.g. Field Effect Transistors (FETs), Insulated-Gate Metal Transistors (IGBTs), etc. In an embodiment, the power unit 220 further includes a bus capacitor 224 disposed across the DC bus line 202 to absorb residual voltage irregularities, and a shunt resistor 226 disposed on the DC bus line 202 for measuring a current passing through the DC bus line 202.

In an embodiment, FETs may be more suitable for relatively lower power / lower voltage power tool applications (e.g., power tools having operating voltages of approximately 10 to 80 V), and IGBTs may be more suitable for relatively higher voltage / higher voltage power tool applications (e.g., power tools having operating voltages of approximately 100 - 240 V).

In an embodiment, control unit 230 may include a controller 232 and a gate driver 234. In an embodiment, controller 232 is a programmable device (e.g., a micro-controller, micro-processor, etc.) arranged to control a switching operation of the power devices in power switching circuit 222. In an embodiment, controller 232 handles all aspect of motor control, including, but not limited to, motor drive and commutation control (including controlling the switching operation of the power switching circuit 222 to control motor speed, forward/reverse drive, phase current limit, start-up control, electronic braking, etc.), motor stall detection (e.g., when motor suddenly decelerates or motor current rapidly rises), motor over-voltage detection and shutdown control, motor or module over-temperature detection and shutdown control, electronic clutching, and other control operations related to the motor.

In an embodiment, controller 232 receives rotor rotational position signals from a set of position sensors 236 provided in close proximity to the motor 100 rotor. In an embodiment, position sensors 236 may be Hall sensors. It should be noted, however, that other types of positional sensors may be alternatively utilized. It should also be noted that controller 232 may be configured to calculate or detect rotational positional information relating to the motor 100 rotor without any positional sensors (in what is known in the art as sensorless brushless motor control).

In an embodiment, controller 232 may also receive an ON/OFF signal from an input unit 208. Input unit 208 is coupled to the trigger switch 34 and provides the ON/OFF signal according to the state of the trigger switch 34. In a power tool configured to vary the rotational speed of the motor based on the travel distance of the trigger switch 34, the input unit 208 may provide a variable-speed signal to the controller 232. Based on the rotor rotational position signals from the position sensors 238 and the ON/OFF and/or variable-speed signal from the input unit 208, controller 232 outputs drive signals UH, VH, WH, UL, VL, and WL through the gate driver 234. Gate driver 234 is provided to output the voltage level needed to drive the gates of the semiconductor switches within the power switch circuit 222 in order to control a PWM switching operation of the power switch circuit 222.

In an alternative and/or additional embodiment, a contact switch 210 coupled to the trigger switch 34 is disposed along the current path from the battery receptacle 40 to the power switch circuit 222. An additional contact switch 212 is coupled along the current path from the battery receptacle 40 to the power supply regulator 206. Contact switches 210 and 212 are conjointly driven by the trigger switch 34 to power the power unit 220 and control unit 230 when the trigger switch 34 is actuated by the operator. In an embodiment, a diode 214 is disposed across the contact switch 210 to allow reverse flow of regenerative current into the battery pack 16, as will be discussed later in detail.

In an embodiment, power supply regulator 206 may include one or more voltage regulators to step down the power supply to a voltage level compatible for operating the controller 232 and/or the gate driver 234. In an embodiment, power supply regulator 206 may include a buck converter and/or a linear regulator to reduce the power voltage from the battery pack 16 down to, for example, 15V for powering the gate driver 234, and down to, for example, 3.3V for powering the controller 232.

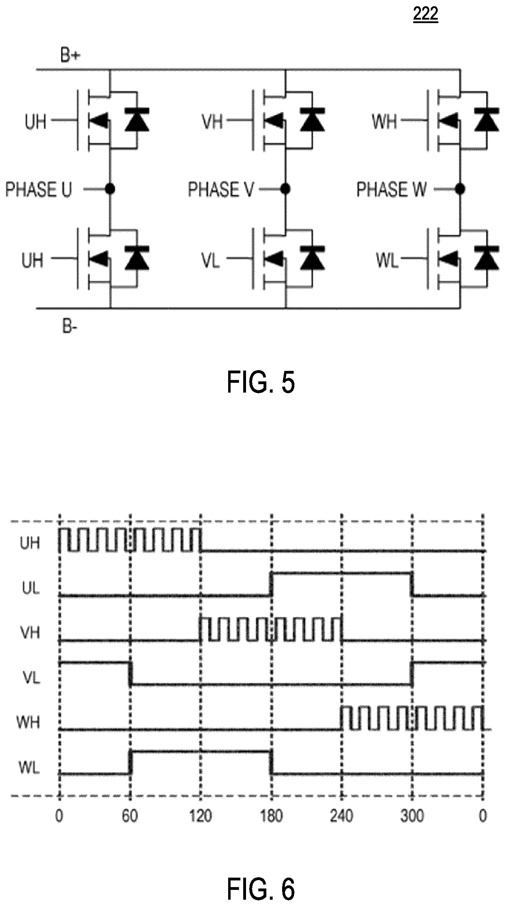

FIG. 5 depicts an exemplary power switch circuit 222 having a three-phase inverter bridge circuit, according to an embodiment. As shown herein, the three-phase inverter bridge circuit includes three high-side switches and three low-side switches. The gates of the high-side switches driven via drive signals UH, VH, and WH, and the gates of the low-side switches are driven via drive signals UL, VL, and WL. In an embodiment, the drains of the high-side switches are coupled to the sources of the low-side switches to output power signals PU, PV, and PW for driving the BLDC motor 100. Further, the sources of the high-side switches are coupled to the B+ node and the drains of the low-side switches are coupled to the B- node. By driving the gates of the switches, the motor controller 232 controls the phase of the motor being energized and the amount of electric power being delivered.

FIG. 6 depicts an exemplary waveform diagram of a pulse-width modulation (PWM) drive sequence of the three-phase inventor bridge circuit of FIG. 5 within a full 360-degree conduction cycle. As shown in this figure, within a full 360° cycle, each of the drive signals associated with the high-side and low-side power switches is activated during a 120° conduction band ("CB"). In this manner, each associated phase of the BLDC motor is energized within a 120° CB by a pulse-width modulated voltage waveform that is controlled by the control unit 230 as a function of the desired motor rotational speed. For each phase, the high-side switch is pulse-width modulated by the control unit 230 within a 120° CB. During the CB of the high-side switch, the corresponding low-side switch is kept low, but one of the other low-side switches is kept high to provide a current path between the power supply and the motor windings. The motor controller 232 controls the amount of voltage provided to the motor, and thus the speed of the motor, via PWM control of the high-side switches.

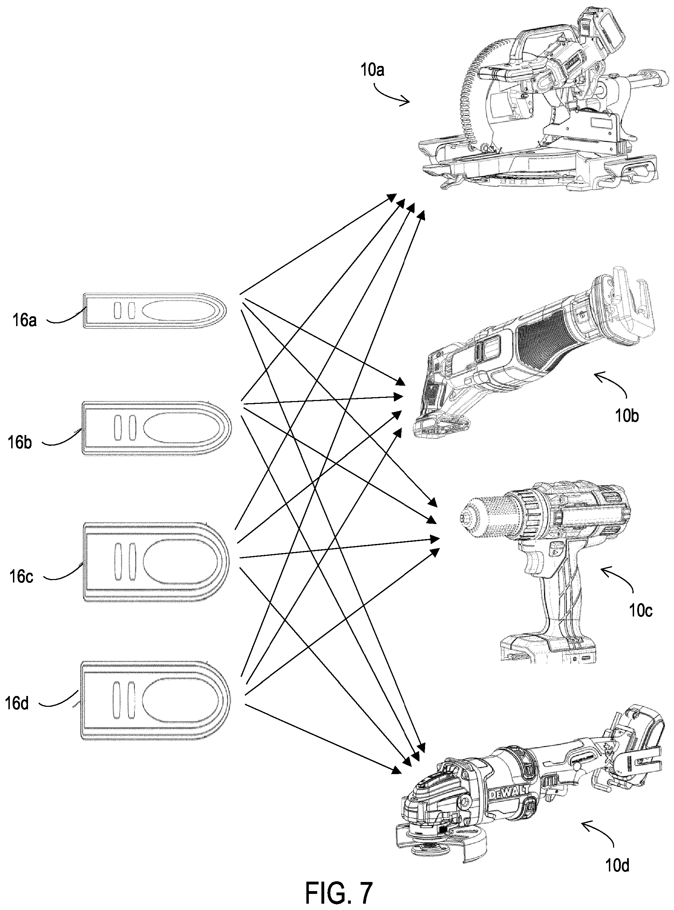

FIG. 7 depicts a view of a set of exemplary power tools 10a-10d receiving different capacity battery packs 16a-16d, according to an embodiment. In an embodiment, exemplary power tools 10a-10d in this figure are a miter saw, a reciprocating saw, a drill, and a grinder, respectively. Is should be understood, however, that these power tools are provided by way of example, and any other type of power tool, including, but not limited to, an impact tool, a hammer drill, a hammer, a wrench, an oscillator tool, a polisher, a cut-off tool, etc. may be used within this family of tools. Though FIG. 1 depicts one exemplary power tool 10 in detail, as is appreciated by one of ordinary skill in the art, each power tool 10a-10d may include features as shown in FIG. 1 including a housing, battery receptacle, gears and/or transmission, a motor 100, and a control module 200. In an embodiment, as discussed below, the battery receptacle 40 of each power tool 10a-10d is capable of receiving any of the battery packs 16a-16d. Further, each power tool 10a-10d includes a battery detection and identification mechanism (integrated into or separately from the control module 200) for identification of the type of battery pack 16a-16d that it receives.

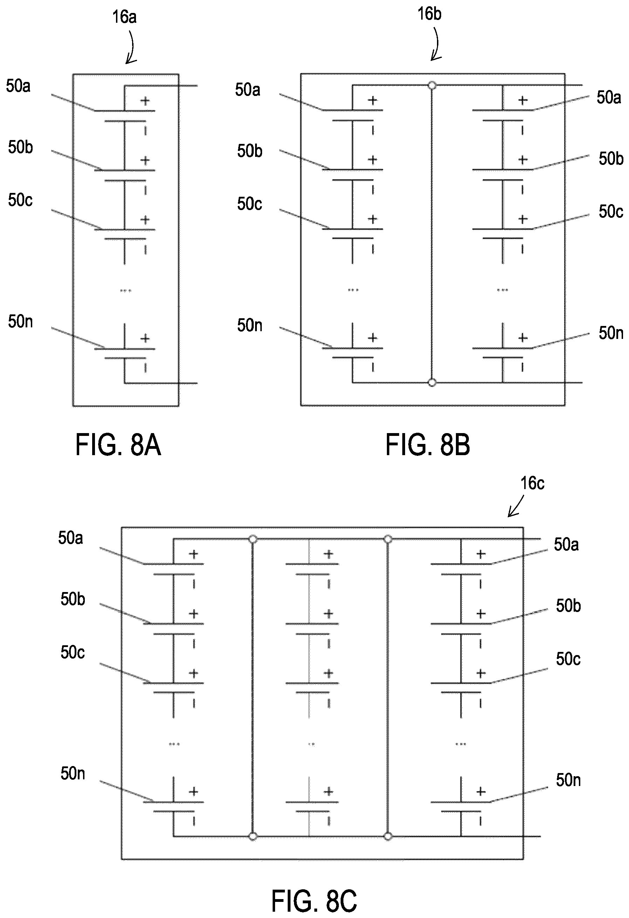

FIGs. 8A-8C depict simple circuit diagrams of battery packs 16a-16c, respectively, according to an embodiment.

In an embodiment, battery pack 16a is a low-capacity battery pack including a series of battery cells 50a-50n. Each battery cell 50a-50n has a lithium or lithium-ion composition having a maximum rated voltage (e.g., 4V or 4.1V) and a nominal voltage (e.g., 3.8V). The nominal voltage refers to the average state of charge below the maximum voltage within which the cells commonly operate. Low-capacity battery pack 16a in this example may include five battery cells 50a-50n in series for a maximum voltage of approximately 20V and a nominal voltage of approximately 18V. In this example implementation, the battery pack 16a may have a capacity of approximately 1.5 to 3.0 Ah depending on the cell impedance.

In an embodiment, battery pack 16b is a medium-capacity battery pack including two rows of cells 50a-50n in parallel. Each row of cells 50a-50n includes the same number of cells as low-capacity battery pack 16a such that medium-capacity battery pack 16b has the same maximum rated voltage (e.g., approximately 20V) and nominal voltage (e.g., approximately 18V) as the low-capacity battery pack 16a. However, the parallel arrangement of the cells increases the capacity of the medium-capacity battery pack 16b to approximately double that of the low-capacity battery pack 16a (e.g., approximately 6.0 Ah), while reducing the battery pack impedance to approximately half the impedance of the low-capacity battery pack 16a.

In an embodiment, battery pack 16c is a high-capacity battery pack including three rows of cells 50a-50n in parallel. Each row of cells 50a-50n includes the same number of cells as low-capacity battery pack 16a such that high-capacity battery pack 16c has the same maximum rated voltage (e.g., approximately 20V) and nominal voltage (e.g., approximately 18V) as the low-capacity battery pack 16a and the medium-capacity battery pack 16c. However, the parallel arrangement of the cells increases the capacity of the high-capacity battery pack 16b to approximately triple that of the low-capacity battery pack 16a (e.g., approximately 9.0 Ah), while reducing the battery pack impedance to approximately 1/3 the impedance of the low-capacity battery pack 16a.

In an embodiment, battery pack 16d includes the same number of parallel rows of cells as battery pack 16c, but with lower impedance battery cells. The cell battery impedance may depend upon several factors, including but not limited to, the cell chemistry, cell diameter, etc. For the purposes of this disclosure, battery pack 16d is considered a high-capacity battery pack with a capacity of approximately 12 Ah.

According to embodiments of the invention, battery packs 16a-d include the same rated and nominal voltages and are provided with the same terminal interface for coupling with the family of power tools 10a-10d. However, battery packs 16a-d have different ampere-hour capacities. While low, medium, and high rated capacities in these examples refer to packs with one, two and three rows of battery cells connected in parallel, it should be understood that these configurations are exemplary and battery packs with higher numbers of parallel connections may be utilized. As discussed, battery capacity relates to the number of parallel connection between the battery cells, as well as cell impedance, cell chemistry, etc. It is also noted that the capacity and impedance values provided herein are by way of example and a cell with any impedance level may be incorporated into a battery pack with any number of parallel connections. For example, a 3P battery pack may be provided with very low impedance cells to achieve a capacity of 12Ah, 15Ah, 18Ah.

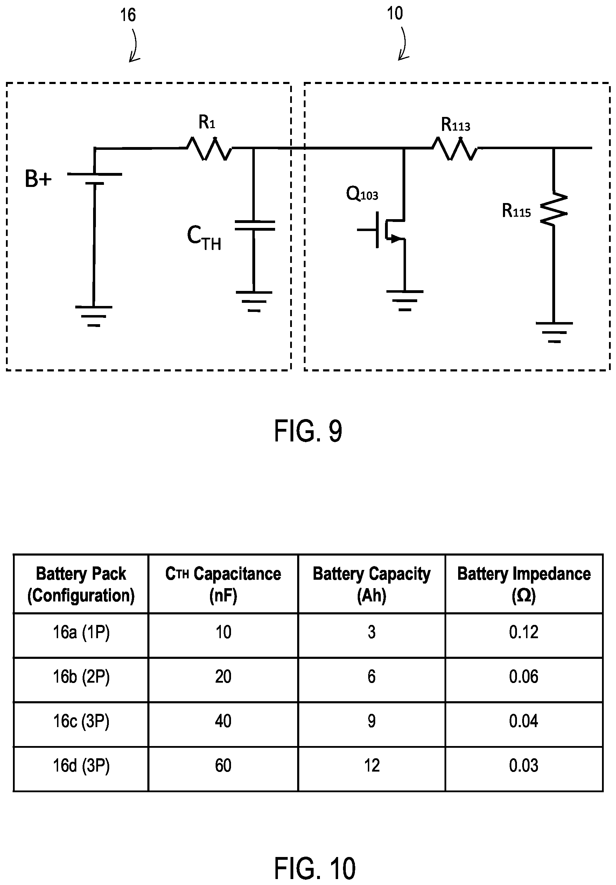

FIG. 9 is a simplified circuit diagram of a battery pack identification mechanism and the corresponding power tool mechanism for pack ID detection, according to an embodiment. In an embodiment, each battery pack 16 (i.e., 16a-16d) is provided with a RC circuit including a unique capacitor CTH and a resistor R1 couples to the battery cells. Each power tool 10 (i.e., 10a-10d) includes a switch Q103 that becomes parallel to the capacitor CTH when the battery pack 16 is coupled to the tool 10 and that switchably discharges the capacitor CTH when it is switched ON. In an embodiment, the controller 232 activates the switch Q103 and waits a predetermined amount of time (e.g., 1-3 ms) to allow the capacitor CTH to fully discharge. Thereafter, the controller 232 then deactivates the switch Q103, allows the capacitor CTH to recharge, and calculates its capacitance based on the time it takes to recharge. The capacitance of the capacitor CTH is indicative of the battery pack ID that is unique for each of the battery packs 16a-16d.

It is noted that other pack ID detection mechanisms may alternatively be utilized. For example, the power tool may receive a unique signal from the battery pack 16, read a unique resistance level of an internal resistor of the battery pack 16, or calculate an impedance of the battery pack 16 during use to identify the pack ID. US Patent Publication No. 2023/0411978, which is incorporated herein by reference in its entirety, provides another example of a mechanism to identify the battery pack ID using Initial Position Detection Signals applies to the motor in a sensorless commutation scheme.

FIG. 10 is a table depicting different capacitance values for different capacity battery packs 16a-d, according to an embodiment. In this example, battery configuration 1P, 2P, and 3P designate the number of parallel connections in battery pack 16a-16c. Using the calculated capacitance of CTH, the controller identifies the battery pack identification, which is associated (among other things) with the battery pack's number of parallel connections.

FIG. 10 additionally depicts exemplary battery capacity (ampere-hours) and impedance (mΩ) levels for the four battery configurations, according to an embodiment. In this example, low-capacity battery pack 16a has a 3Ah capacity and a 120 mΩ pack impedance; medium-capacity battery pack 16b has a 6Ah capacity and a 60 mΩ pack impedance; high-capacity battery pack 16c has a 9Ah capacity and a 40 mΩ pack impedance; and high-capacity battery pack 16d has an 12Ah capacity and a 30 mΩ pack impedance. As shown herein, the battery pack impedance is reduced as more parallel rows of cells are provided and/or as cell impedance is reduced.

Given the same motor control scheme and operating conditions (i.e., same load, output speed, etc.), higher capacity battery packs as described herein provide increased run-times associated with their rated ampere-hour capacity. Also, higher capacity battery packs allow the power tool motor 104 to provide a higher power output due to the lower impedance of the battery pack.

In an embodiment, there are various events that may prompt the controller 232 to stop motor commutation. Examples of such events include, but are not limited to, trigger-release by the user, a battery over-current condition (i.e., when the controller 232 senses or receives a signal indicative of the current being drawn from the battery exceeds a predetermined threshold), a battery under-voltage condition (i.e., when the controller 232 senses or receives a signal indicative of the battery voltage or the voltage on a battery cell or series of cells falls below a predetermined threshold), a battery or tool over-temperature condition (i.e., when the controller 232 senses or receives a signal indicative of the battery or tool temperature being outside a predetermined temperature range), etc. Upon detection of such an event, the controller 232 may stop commutation of the motor 100 and allow the motor 100 to coast down by deactivating all the high-side and low-side power switches of the power switch circuit 222. In this scenario, current resulting from the back-EMF (electro-magnetic force) voltage of the motor 28 is, if greater than the voltage on bus capacitor 224, conducted backwards through the anti-parallel diodes of the power switches, and the motor 28 slowly slows down as a result of the internal friction between the motor components until it comes to a stop. Alternatively, according to an embodiment, the controller 232 may electronically brake the motor 100 by short-circuiting the high-side or low-side power switches. In an embodiment, controller 232 may turn ON the three high-side power switches simultaneously while the three low-side power switches are turned off. Alternatively, controller 232 may turn ON the three low-side power switches simultaneously while the three high-side power switches are turned off. This allows the back-EMF current of the motor 100 to circulate through the motor windings, thus stopping the rotation of the motor. Specifically, as the rotor continues to spin inside the stator, the change in magnetic flux in the stator coils resulting from the rotation of the rotor results in a back-EMF voltage developing on the stator coils. Short-circuiting the coils completes the circuit, allowing the back-EMF induced current to flow through the windings and dissipate, thus generating a braking force to stop the rotation of the rotor.

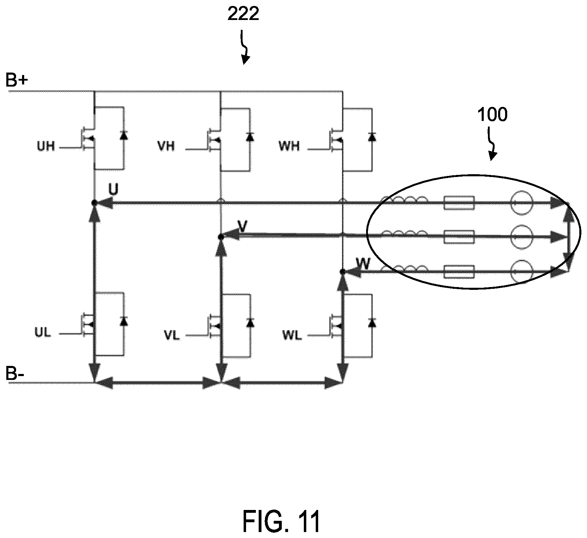

FIG. 11 depicts a circuit diagram of the three-phase inverter bridge circuit of the power switch circuit 222, showing the current path generated by the back-EMF of the motor 100 when the three low-side switches are turned on simultaneously, according to an embodiment. Here, as the rotor magnets move past the stator coils during the braking period, the induced current generated by the magnetic field of the magnets within the stator coils circulate through at least two of the low-side switches at any given time and flow back into the motor to apply a braking force to the motor. This induced current applies the full-force of the motor back-EMF to stop the rotation of the motor, and it is referred to herein as a "hard brake"). While the peak induced current circulating through the motor can become significantly high during a hard brake, the brake can bring the motor to a halt quickly. In some tools such as grinders utilizing commonly used grinding discs, the had brake can stop the motor from speeds exceeding 8000 RPM in less than 0.4 seconds. In tools such as miter saws utilizing heavy saw blades with high inertia, the hard braking period may take 1 to 2 seconds.

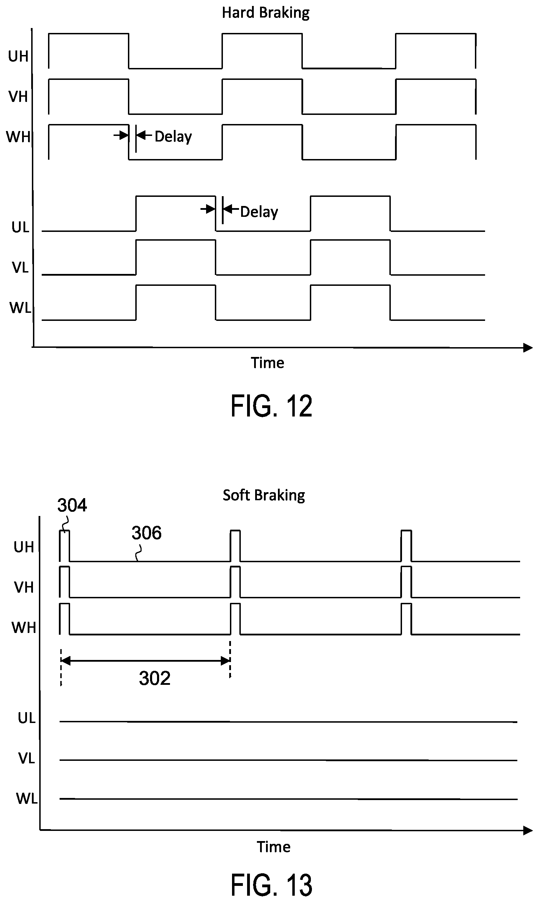

Fig. 12 depicts a waveform diagram of a hard braking scheme, according to an embodiment. In this embodiment, the controller 232 may alternatingly turn the high-side and low-side power switches ON (i.e., simultaneously turning the high-side switches ON for a given period, followed by simultaneously turning the low-side switches ON for a given period) in order to distribute the braking current between the low-side and high-side switches. A small delay period is introduced between the high-side and low-side braking periods to ensure is no shoot-through of one high-side switch and one low-side switch of the same leg. Here, hard braking may be defined as long periods of braking by simultaneously activating the high-side or low-side switches, followed by small delaying periods in between. In other words, hard braking is defined by braking cycles where the braking period has a significantly high duty cycle. In an example, each braking period may be approximately 20-40 milliseconds, with a 1-5 microsecond delay in between. Thus, in the illustrated example of a hard brake, the braking period has a duty cycle of more than 99.99%. As understood by persons of ordinary skill in the art, the delay period herein is so small compared to the braking period that it the practical effect of the hard braking execution is to substantially apply braking force to the motor throughout the duration of the braking execution.

In an embodiment, hard braking may be appropriate in some circumstances. For example, in an embodiment, controller 232 may be configured to execute the above-described hard brake upon detection of certain events such as a pinch event, where it is desirable to brake the motor 100 as quickly as possible to prevent the tool from flying out of the user's hands. In an embodiment, a pinch event may be detected when the controller 232 detects sudden deceleration of the motor 100 indicative of a stuck rotor condition or a kickback event, or it detects a large spike in motor current (i.e., current of more than a predetermined value) indicative of a similar events. Controller 232 may also initiate a hard brake when it detects other failure events based on a rate of change of speed, voltage, or current.

While hard braking may be desirable in some circumstances, in other circumstances it may be desirable to brake the motor in a smooth fashion. In an embodiment, the controller 232 may be configured to execute a "soft brake" upon detection of other events such as trigger release, a battery over-current condition, a battery under-voltage condition, a battery or tool over-temperature condition, etc. Additionally, or alternatively, the controller 232 may execute a braking profile that includes a combination of soft brake and hard brake periods. In an embodiment, the controller 232 may have a designated braking profile associated with each of event that prompts braking the motor. Incorporation of soft braking segments in the overall braking profiles ensures that the motor inductive current does not become too high to damage the power switches. Further, it provides a slower ramp down for the output shaft, which may be desirable by many users and for many power tool applications.

FIG. 13 depicts a waveform diagram for a soft braking scheme, according to an embodiment. As shown herein, when executing a soft brake by the controller 232, the high-side (or low-side) power switches are turned on simultaneously for a short period followed by a longer period in which all power switches are kept OFF. In other words, the braking period is divided into multiple braking cycles 302, where each braking cycle 302 includes a braking period 304 followed by a relatively coasting period 306. The controller 232 may be configured to set a determine and control the braking period 304 as a percentage (i.e. duty cycle) of each braking cycle 302. In the exemplary embodiment depicted herein, the duty cycle of the braking period 304 is approximately 5% to 10% of the braking cycle 302. It is noted, however, that depending on the system requirements and the desired braking speed, the duty cycle of the braking period may be significantly higher, e.g., 10% to 95% of the braking cycle 302. It is noted that while in this embodiment, the high-side power switches are simultaneously activated during each of the braking period 304, the low-side switches may alternatively be simultaneously activated. In an embodiment, the high-side and low-side switches may be alternatingly activated in successive braking cycles 302.

In an embodiment, soft braking may be controlled with a constant duty cycle of the brake period 304 throughout, which results in a substantially linear speed drop. Alternatively, the controller 232 may be configured to apply a variable duty cycle, e.g., beginning at 10% (i.e., 10% braking period 304 and 90% coasting period 306 within a braking cycle 302) and gradually increasing the duty cycle to 60% (i.e., 60% braking period 304 and 40% coasting period 306 within a braking cycle 302). This results in a non-linear speed drop with a curved speed ran-down profile.

Soft braking allows the controller 232 to control the time it takes to brake the motor 100. In an embodiment, the controller 232 may be configured to set the duty cycle of the braking period 304 based on the rotational speed of the motor 100 to adjust the time it takes to bring the motor to a full stop. For example, the controller 232 may set the duty cycle of the braking period 304 to a higher value when the tool is running at full speed and to a lower value when the tool is running at a medium or low speed.

In an embodiment, the controller 232 may apply various braking profiles include a hard brake, a linear soft brake, a non-linear soft brake, or a combination a hard brake and a soft brake. For example, a braking profile may include a hard braking segment followed by a soft braking segment, or vice versa. US Patent No. 11,047,528, which is incorporated herein by reference in its entirety, discloses a power tool including such braking profiles. In one example, the braking profile includes a soft braking segment, wherein the rotational speed of the motor gradually drops from approximately 17,000 rpm to approximately 4,000 rpm within approximately 0.2 seconds, followed by a hard braking segment, wherein the rotational speed of the motor quickly drops from approximately 4,000 rpm to zero in less than 0.01 second.

In soft braking, the inductive current of the motor 100 builds up and circulates through the motor during each braking period 304. When the power switches of the power switching circuit 222 are turned off during the coasting period 306, this built-up current, also known as regenerative current, flows through the antiparallel diodes of the power switches back into the DC bus line. For example, when the rotor magnetic field generates the back-EMF (inductive) current through V-H phases of the motor 100, the current path of the inductive current is conducted through the antiparallel diodes of the UH power switch (see FIG. 11), through the DC bus line, and back into the motor through the VL power switch. The amount of back-EMF (inductive) voltage through the motor coils is determined by the formula *Vcoil = L * Di* / Dt, where L designates the inductance of the motor. While the DC bus capacitor 224 stores some of the regenerative current, a significant amount of the regenerative current flows into the battery pack 16, if the inductive voltage exceeds the voltage of the battery pack, to complete the current loop. In some embodiments, the battery pack 16 may be configured to utilize the regenerative current to recharge its battery cells during each coasting period 306. In an embodiment, by controlling the duty cycle of the brake periods 304 properly, the controller 232 can control the *Di* / *Dt* in the above formula, and therefore the amount of regenerative current that is circulated into the battery pack 16.

In an embodiment, it has been observed that depending on the size and inductance of the motor, the amount of regenerative current supplied to the battery pack 16 may exceed the amount of current that the battery pack can handle to recharge its cells. For example, battery pack 16a previously described, with a capacity of approximately 1.5 to 3.0 Ah, may only be able to effectively absorb an average current of 4A and/or a peak current of approximately 10A. A regenerative current amount that exceeds this average current may cause damage to the battery cell or other electronic components of the battery pack 16a. By contrast, battery pack 16b, with a capacity of approximately 6.0 Ah, due to its relatively lower impedance, may be able to effectively absorb an average current of 8A and/or a peak current of approximately 15A. Battery pack 16c, with a capacity of approximately 9.0 Ah, may be able to effectively absorb an even higher average current of 12A and/or a peak current of approximately 20A. Battery pack 16d, with a capacity of approximately 12.0 Ah, may absorb an event higher average and peak current than battery pack 16c.

Accordingly, in an embodiment of the invention, the controller 232 is configured to set the braking profile according to a battery pack ID of the battery pack 16 coupled to the power tool 10. In this manner, the controller 232 can set a braking profile that generates relatively higher regenerative current when the tool is coupled to a high-capacity battery pack, and it can limit the amount of regenerative current when the tool is coupled to a low-capacity battery pack. In other words, the controller 232 can set a braking profile that is optimized to provide a suitable amount of regenerative current that matches the impedance and capacity of the battery pack.

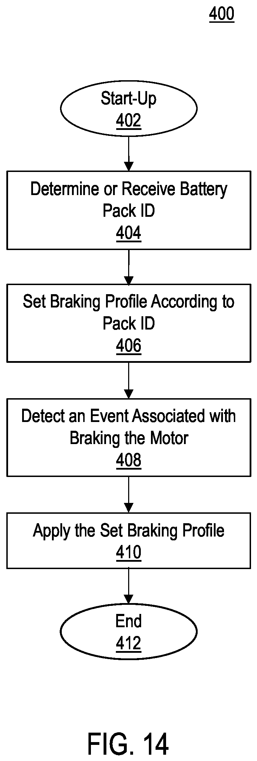

Fig. 14 depicts an exemplary flow diagram of a process 400 for controlling the braking profile based on pack ID utilized by the controller 232, according to an embodiment. In an embodiment, process 400 begins at step 402, which may be the tool start-up upon initial trigger pull, tool start-up upon actuation of an ON/OFF switch, or upon detection of a new battery pack coupled to the power tool in some power tools. Process 400 then proceeds to step 404, where the controller 232 determines or receives a unique pack ID of the battery pack 16. As discussed above, the pack ID may be determined based on a charge or discharge time of an internal capacitor within the battery pack 16, the resistance of an internal resistor within the battery pack 16, a signal communicated from the battery pack 16 to the controller, or impedance calculations conducted within the controller 232. Once the pack ID is determined or received, the process 400 proceeds to step 406, where the controller 232 sets a braking profile according to and in association with the pack ID. This may be done using a look-up table, as described below in detail. Alternative, or additionally, this may be done via a pre-set matrix, where the braking profile is additionally set in association with an associated braking event, i.e., an event that require or prompt braking the motor (e.g., release of the trigger switch, or a failure event such as a pinch, high current, battery voltage failure, etc.). Process 400 proceeds to step 408, where the controller 232 awaits detection of an event that requires or prompts braking of the motor 100. Here, the controller 232 may further set or optimize the braking profile according to the detected event in accordance to the matrix. Process 400 then proceeds to step 410, where the controller 232 applies the set braking profile to electronically brake the motor. The regenerative current of the motor is applied to the battery pack 16 during the soft-braking portion of the set braking profile. The process 400 ends at step 412 after the conclusion of the soft braking and hard braking segments of the braking profile.

Table 1 below depicts an exemplary look-up table utilized by the controller 232 to set the braking profile according to the pack ID in step 406 above, according to an embodiment. In an embodiment, the controller 232 may set characteristics of the soft braking segment of the braking profile differently according to the battery pack ID. For example, the controller 232 may set the duration of the soft braking segment (seconds) and/or a soft brake duty cycle ramp-up range (i.e., the range of the duty cycle from start to finish of the soft braking segment) based on the pack ID. In some embodiments, e.g., power tools such as miter saws, where motor takes considerable time to brake even during the hard brake period due to the high inertia of the saw blade, the duration of the hard brake period (seconds) may also be customized and set based on the pack ID.

**TABLE 1**

| Battery ID (Capacity) | Soft Brake Period (sec) | Soft Brake Duty Cycle Range | Soft Brake Current Threshold | Hard Brake Period (sec) |
|---|---|---|---|---|
| Pack 16a (3 Ah) | 0.5 | 10%-30% | 10A | < 2.0 |
| Pack 16b (6 Ah) | 1.0 | 10%-60% | 15A | < 1.7 |
| Pack 16c (9 Ah) | 2.0 | 10%-80% | 20A | < 1.0 |
| Pack 16d (12 Ah) | 2.0 | 10%-100% | 20A | < 1.0 |

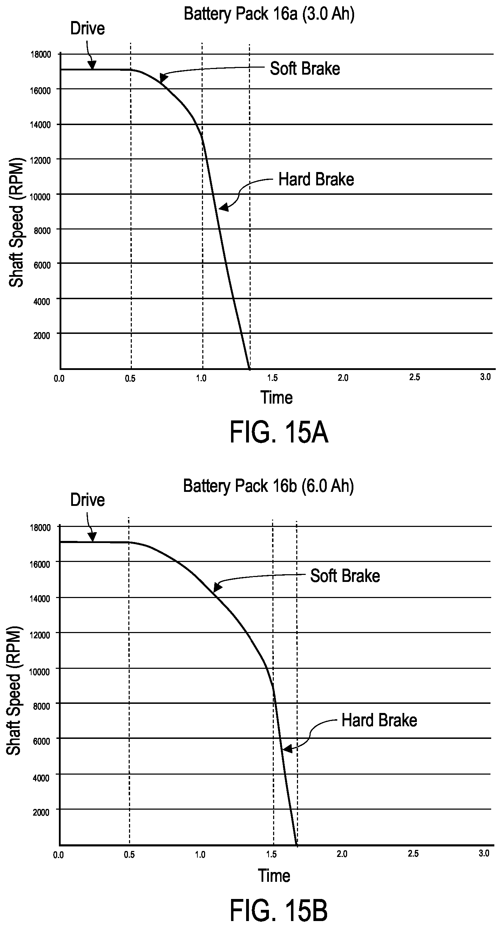

FIGs. 15A-15D depict speed-time graphs of an exemplary power tool including the braking profiles of the power tool 10 that are set according to the pack ID of battery packs 16a, 16b, 16c and 16d, respectively, according to an embodiment. Each graph in these figures includes a motor drive segment, during which the motor is commutated in a normal operation. For illustration purposes, the motor drive segment is only 0.5 second in these graphs, though it should be understood that the motor drive segment may be significantly longer in some power tool applications. The braking profile in each graph starts following the drive segment (i.e., at 0.5 second in these examples). Each braking profile includes a soft braking segment followed up by a hard braking segment. The gradual increase in the duty cycle within each soft braking segment results in a non-linear curved speed profile within the soft braking segment. In an embodiment, the controller 232 controls the soft braking segment of each braking profile in accordance with the pack ID of the battery pack, which in this example is consistent with Table 1 above. After the soft braking segment, the braking profile applies the hard braking segment, which causes the rotational speed to drop sharply to a fall stop. In an embodiment, the controller 232 wait for the hard braking segment to be concluded within the hard brake period.

With reference to FIGs. 15A-15D and table 1, in an example embodiment, the controller 232 may set the soft braking segment to 0.5 second for battery pack 16a (3.0 Ah), to 1 second for battery pack 16b (6.0 Ah), and to 2 seconds for battery packs 16c (9.0 Ah) and 16d (12.0 Ah). This ensures that the duration of time within each braking profile that regenerative current is supplied to the battery pack (and subsequently the total regenerative current supplied within the braking segment) is more limited for battery pack 16a than it is for battery pack 16b and is more limited for battery pack 16b than it is for battery packs 16c and 16d.

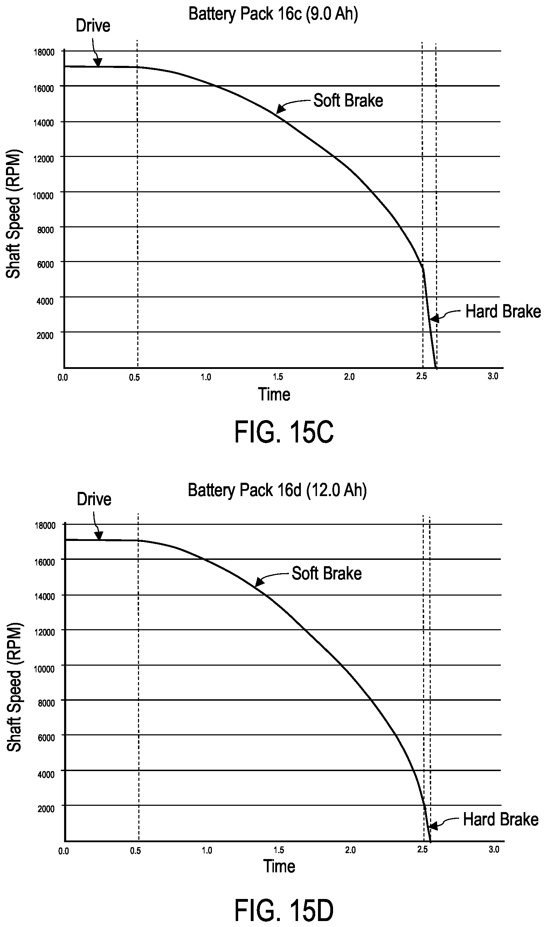

Similarly, the controller may set the soft brake duty cycle ramp-up range (i.e., the range of the duty cycle from start to finish of the soft braking segment) to the range of 10%-30% for battery pack 16a (3.0 Ah), the range of 10%-60% for battery pack 16b (6.0 Ah), the range of 10%-80% for battery pack 16c (9.0 Ah), and the range of 10%-100% for battery pack 16d (12.0 Ah). This ensures that within the soft-braking segment of each braking profile, the total amount of time within which the regenerative current is built up (i.e., as a ratio of the braking period 304 to braking cycle 302 in FIG. 13) is more limited for battery pack 16a than it is for battery pack 16b, is more limited for battery pack 16b than it is for battery pack 16c, and is more limited for battery pack 16c than it is for battery pack 16d. As shown in FIGs. 15C and 15D, while the durations of the soft braking segments are equal for battery packs 16c and 16d, the soft brake period of FIG. 15D ends at a 100% duty cycle, which results in an overall greater reduction in the output speed of the shaft and a smoother transition to the hard braking segment.

In this example, the speed drop during the soft braking segment is approximately 4,000 RPM for battery pack 16a (3.0 Ah), approximately 8,000 RPM for battery pack 16b (6.0 Ah), approximately 11,000 RPM battery pack 16c (9.0 Ah), and approximately 15,000 RPM for battery pack 16d (12.0 Ah). Further, in this example, the hard brake segment takes gradually longer to complete for battery pack 16a - 16d to complete in that order.

In an embodiment, when coupled to battery pack 16a (3.0 Ah), using the braking profile of FIG. 15A, controller 232 provides approximately 10 to 50 Joules of regenerative energy, preferably approximately 20 to 40 Joules of regenerative energy, to the battery pack 16a. In an embodiment, when coupled to battery pack 16b (6.0 Ah), using the braking profile of FIG. 15B, controller 232 provides approximately 200 to 260 Joules of regenerative energy, preferably approximately 220 to 240 Joules of regenerative energy, to the battery pack 16b. In an embodiment, when coupled to battery pack 16c (9.0 Ah), using the braking profile of FIG. 15C, controller 232 provides approximately 310 to 380 Joules of regenerative energy, preferably approximately 330 to 360 Joules of regenerative energy, to the battery pack 16c. In an embodiment, when coupled to battery pack 16d (12.0 Ah), using the braking profile of FIG. 15D, controller 232 provides approximately 350 to 430 Joules of regenerative energy, preferably approximately 370 to 410 Joules of regenerative energy, to the battery pack 16d.

With continued reference to Table 1, in an embodiment, controller 232 may additionally and/or alternatively set a regenerative current threshold (i.e., the maximum allowable value of the regenerative braking current) according to the battery pack ID via the lookup table and control the soft braking segment so as to maintain the regenerative braking current at a level less than or equal to the regenerative current threshold, as explained below.

In an embodiment, the controller 232 may utilize a comparator (i.e., in hardware of software) that compares the bus current (i.e., a current passing through the bus line, which may be measured as a function of voltage drop across the shunt resistor 226 in FIG. 4) to the regenerative current threshold. In an embodiment, if the bus current, which carries the regenerative current during the soft braking segment, exceeds the regenerative current threshold, the controller 232 introduces a decay period. The duration of the decay period is set to be greater than the duration of a braking cycle 302 (e.g., by a factor of greater than or equal to 5). Within the decay period, braking periods 304 are no longer applied, which allow the regenerative current to ramp down to a level below the regenerative current threshold. After the expiration of the decay period, the soft braking segment is resumed at the set duty cycle. This process is repeated every time the bus current exceeds the regenerative current threshold, and continues throughout the soft braking segment, to clip and maintain the regenerative current carried through the bus line at a level less than or equal to the regenerative current threshold.

In an embodiment, the above-described process may be performed in conjunction with setting the braking profile in accordance with the pack ID. In this embodiment, after the parameters for the soft braking segment are according to the pack ID, the controller actively monitors the bus current and clips the current within the soft braking segment as described above to maintain the regenerative current at or below the regenerative current threshold.

Alternatively, the above-described process may be conducted as a substitute setting the braking profile in accordance with the pack ID. Here, the controller 232 does not set a braking profile in accordance with the pack ID. Rather, the controller 232 only sets the regenerative current threshold according to the battery pack ID and clips the current within the soft braking segment as described above to maintain the regenerative current at or below the regenerative current threshold.

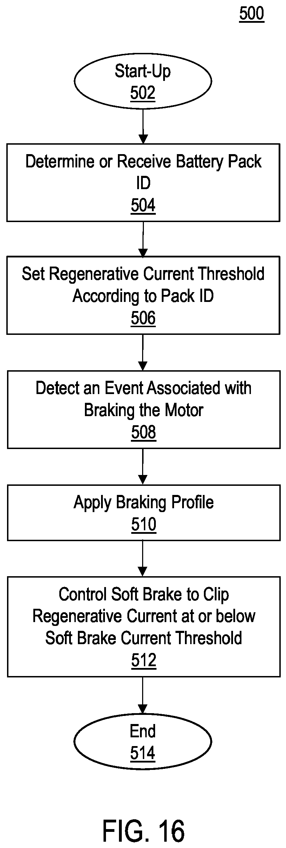

FIG. 16 depicts an exemplary flow diagram of a process 500 utilized by the controller 232 to maintain the regenerative current at or below the regenerative current threshold, according to an embodiment. As noted above, the proceed 500 may be conducted in conjunction with process 400 previously described, on independently and/or as a substitute for process 400.

In an embodiment, process 500 begins at step 502, which may be the tool start-up upon initial trigger pull, tool start-up upon actuation of an ON/OFF switch, or upon detection of a new battery pack coupled to the power tool in some power tools. Process 500 then proceeds to step 504, where the controller 232 determines or receives a unique pack ID of the battery pack 16. As discussed above, the pack ID may be determined based on a charge or discharge time of an internal capacitor within the battery pack 16, the resistance of an internal resistor within the battery pack 16, a signal communicated from the battery pack 16 to the controller, or impedance calculations conducted within the controller 232. Once the pack ID is determined or received, the process 500 proceeds to step 506, where the controller 232 sets the regenerative current threshold according to and in association with the pack ID. In an example, this may be done using the parameters of Table 1 (e.g., 10A for battery pack 16a, 15A for battery pack 16b, and 20A for battery packs 16c and 16d). Process 500 proceeds to steps 508 and 510, where the controller 232 awaits detection of an event that requires or prompts braking of the motor 100, and it applies a braking profile (e.g., one set according to the event, and/or set according to the pack ID) to electronically brake the motor. The regenerative current of the motor is applied to the battery pack 16 during the soft-braking portion of the set braking profile. Process 500 then proceeds to step 512, where the controller 232 controls the soft brake segment to clip the regenerative current at or below the regenerative current threshold, as described above. Process 500 ends at step 514 at the conclusion of the hard brake segment of the braking profile.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A power tool comprising:
a tool housing;
a motor disposed within the tool housing;
a battery receptacle arranged to be coupled to a battery pack having a rated capacity;
a power switch circuit disposed between the battery receptacle and the motor; and
a controller that controls the power switch circuit to drive the motor, wherein the controller is configured to:
determine or receive a pack ID associated with the rated capacity of the battery pack;
set a braking profile for electronically braking the motor based on the pack ID; and
apply an electronic brake to the motor in accordance with the set braking profile upon detection of an event associated with stoppage of the motor.

2. The power tool of claim 1, wherein the battery pack comprises one of a first battery pack having a first rated capacity and a second battery pack having a second rated capacity higher than the first rated capacity,
wherein the controller is configured to set the braking profile such that a regenerative current supplied to the battery pack during the electronic brake is less for the first battery pack than it is for the second battery pack.

3. The power tool of claim 1, wherein the braking profile comprises a soft braking segment including periods of braking during which an inductive current of the motor is generated, each followed by a period of coasting during which a regenerative current associated with the inductive current is supplied to the battery pack.

4. The power tool of claim 3, wherein the controller is configured to set a duration of the soft braking segment based on the pack ID.

5. The power tool of claim 4, wherein the battery pack comprises one of a first battery pack having a first rated capacity and a second battery pack having a second rated capacity higher than the first rated capacity,
wherein the controller is configured to set the duration of the soft braking segment to be greater the second battery pack that it is for the first battery pack such that a regenerative current supplied to the battery pack during the electronic brake is greater for the second battery pack than it is for the first battery pack.

6. The power tool of claim 3, wherein the controller is configured to set a maximum range of a duty cycle of the periods of braking within the soft braking segment based on the pack ID.

7. The power tool of claim 6, wherein the battery pack comprises one of a first battery pack having a first rated capacity and a second battery pack having a second rated capacity higher than the first rated capacity,
wherein the controller is configured to set the maximum range of the duty cycle of the periods of braking within the soft braking segment to be greater the second battery pack that it is for the first battery pack such that a regenerative current supplied to the battery pack during the electronic brake is greater for the second battery pack than it is for the first battery pack.

8. The power tool of claim 3, wherein the controller is configured to set a regenerative current threshold applied to a regenerative current supplied to the battery pack within the soft braking segment based on the pack ID.

9. The power tool of claim 8, wherein the battery pack comprises one of a first battery pack having a first rated capacity and a second battery pack having a second rated capacity higher than the first rated capacity,
wherein the controller is configured to set the regenerative current threshold to be greater the second battery pack that it is for the first battery pack such that the regenerative current supplied to the battery pack during the electronic brake is greater for the second battery pack than it is for the first battery pack.

10. The power tool of claim 3, wherein the braking profile further comprises a hard braking segment, wherein the controller is configured to set a duration of the hard braking segment based on the pack ID.

11. The power tool of claim 3, wherein the battery pack comprises one of a first battery pack having a first rated capacity and a second battery pack having a second rated capacity higher than the first rated capacity, wherein:
a speed drop in the output of the motor during the soft braking segment is greater for the second battery pack than it is for the first battery pack; and/or
a total amount of regenerative energy provided to the battery pack is greater for the second battery pack than it is for the first battery pack.

12. A power tool comprising:
a tool housing;
a motor disposed within the tool housing;
a battery receptacle arranged to be coupled to a battery pack having a rated capacity;
a power switch circuit disposed between the battery receptacle and the motor; and
a controller that controls the power switch circuit to drive the motor, wherein the controller is configured to:
determine or receive a pack ID associated with the rated capacity of the battery pack;
set a regenerative current threshold based on the pack ID;
apply an electronic brake to the motor upon detection of an event associated with stoppage of the motor; and
maintain a regenerative current supplied to the battery pack during the electronic brake at or below the regenerative current threshold.

13. The power tool of claim 12, wherein the battery pack comprises one of a first battery pack having a first rated capacity and a second battery pack having a second rated capacity higher than the first rated capacity,
wherein the controller is configured to set the regenerative current threshold such that the regenerative current is less for the first battery pack than it is for the second battery pack.

14. The power tool of claim 12, wherein the electronic brake is applied according to a braking profile comprising a soft braking segment including periods of braking during which an inductive current of the motor is generated, each followed by a period of coasting during which a regenerative current associated with the inductive current is supplied to the battery pack.

15. The power tool of claim 14, wherein:
the controller is configured to set a duration of the soft braking segment based on the pack ID; and/or
the controller is configured to set a maximum range of a duty cycle of the periods of braking within the soft braking segment based on the pack ID; and/or
wherein the controller is configured to apply the regenerative current threshold during the soft braking segment and the braking profile further comprises a hard braking segment, the controller being configured to additionally set a duration of the hard braking segment based on the pack ID.

16. The power tool of any of claims 12 to 15, wherein the regenerative current threshold is set to 10A if the rated capacity of the battery pack is 3 Ah or less, and to 20A if the rated capacity of the battery pack is 9 Ah or more.

17. A method of controlling a power tool via a controller, the power tool including a motor, a battery receptacle arranged to be coupled to a battery pack having a rated capacity, and a power switch circuit disposed between the battery receptacle and the motor, wherein the controller controls the power switch circuit to drive the motor, the method comprising:
determining or receiving a pack ID associated with the rated capacity of the battery pack;
setting a braking profile for electronically braking the motor based on the pack ID; and
applying an electronic brake to the motor in accordance with the set braking profile upon detection of an event associated with stoppage of the motor.
